(19)

Europäisches
Patentamt
European
Patent Office
Office européen
des brevets

(11) **EP 3 239 790 B1**

(12) **EUROPEAN PATENT SPECIFICATION**

(45) Date of publication and mention
of the grant of the patent:
**14.08.2019 Bulletin 2019/33**

(51) Int Cl.:
***G05B 13/04*** *(2006.01)*

(21) Application number: **17167895.6**

(22) Date of filing: **25.04.2017**

(54) **SYSTEMS AND METHODS TO REDUCE ENERGY USAGE OF INDUSTRIAL MACHINES USING AN ENHANCED MOTION PROFILE**

SYSTEME UND VERFAHREN ZUR VERRINGERUNG DES ENERGIEVERBRAUCHS VON INDUSTRIEMASCHINEN MIT EINEM ERWEITERTEN BEWEGUNGSPROFIL

SYSTÈMES ET PROCÉDÉS POUR RÉDUIRE LA CONSOMMATION D'ÉNERGIE DE MACHINES INDUSTRIELLES AU MOYEN D'UN PROFIL DE MOUVEMENT AMÉLIORÉ

(84) Designated Contracting States:
**AL AT BE BG CH CY CZ DE DK EE ES FI FR GB GR HR HU IE IS IT LI LT LU LV MC MK MT NL NO PL PT RO RS SE SI SK SM TR**

(30) Priority: **28.04.2016 US 201615141259**

(43) Date of publication of application:
**01.11.2017 Bulletin 2017/44**

(73) Proprietor: **Rockwell Automation Technologies, Inc.**
**Mayfield Heights, OH 44124 (US)**

(72) Inventors:
• **DA SILVA, Aderiano M.**
**Milwaukee, WI 53204 (US)**
• **CRAIG, Kevin C.**
**Holbrook, NY 11741 (US)**

(74) Representative: **Grünecker Patent- und Rechtsanwälte**
**PartG mbB**
**Leopoldstraße 4**
**80802 München (DE)**

(56) References cited:
• **ALEXANDER HEIM ET AL: "Trajectory optimization of industrial robots with application to computer-aided robotics and robot controllers", OPTIMIZATION., vol. 47, no. 3-4, 1 January 2000 (2000-01-01), pages 407-420, XP055403043, US ISSN: 0233-1934, DOI: 10.1080/02331930008844489**
• **Heinz Schättler ET AL: "The Pontryagin Maximum Principle: From Necessary Conditions to the Construction of an Optimal Solution", Geometric Optimal Control, 1 January 2012 (2012-01-01), XP055403046, New York, NY ISBN: 978-1-4614-3834-2 Retrieved from the Internet: URL:http://www.springer.com/cda/content/document/cda_downloaddocument/978146143833 5- c1.pdf?SGWID=0-0-45-1338407-p174312767 [retrieved on 2017-08-31]**

**Description**

BACKGROUND

The present disclosure relates generally to industrial automation applications and, more particularly, to systems and methods to reduce energy usage of industrial machines using an enhanced motion profile.

Certain studies estimate that approximately fifty two percent of global energy consumption is in the industrial sector. Further, approximately twenty five percent of the electric energy delivered in the United States in 2013 was used in the industrial sector. One reason for the large amount of energy consumed by the industrial sector is due to relatively inefficient operation of industrial automation equipment (e.g., machines). For example, the purchase of a machine accounts for roughly two to three percent of the total cost of ownership, while energy consumption may account for a majority of the remaining total cost of ownership. In general, the way industrial automation equipment (e.g., machines) is currently operated tends to waste some energy, thereby driving up energy consumption and production costs. Accordingly, it may be desirable to design and control industrial automation equipment more efficiently.

ALEXANDER HEIM ET AL, "Trajectory optimization of industrial robots with application to computer-aided robotics and robot controllers", OPTIMIZATION., US, (20000101), vol. 47, no. 3-4, doi:10.1080/02331930008844489, ISSN 0233-1934, pages 407 - 420, discloses a method for trajectory optimization of industrial robots with application to computer aided robotics and robot controllers.

It is the object of the present invention to provide an improved system and method to reduce energy consumption of industrial machines.

This object is solved by the subject matter of the independent claims.

Embodiments are defined by the dependent claims.

In one embodiment, a tangible, non-transitory computer readable medium stores instructions that, when executed by a processor, cause the processor to receive one or more inputs relating to a mechanical design and desired motion of an industrial machine and iteratively generate an enhanced motion profile within boundaries based on one or more inputs. The enhanced motion profile reduces energy consumption when applied to a motor drive to control a motor connected to the industrial machine. The instructions, when executed by the processor, may also cause the processor to apply the enhanced motion profile to the motor drive to control the motor connected to the industrial machine.

In one embodiment, a method may include receiving, by a processor, one or more inputs relating to a mechanical design and desired motion of an industrial machine and iteratively generating, via the processor, an enhanced motion profile within boundaries based on the one or more inputs. The enhanced motion profile reduces energy consumption when applied to a motor drive to control a motor connected to the industrial machine. The method may also include applying, via the processor, the enhanced motion profile to the motor drive to control the motor connected to the industrial machine.

In one embodiment, a system may include an industrial machine including a motor and a motor drive. The system may also include a control/monitoring device including a processor configured to receive one or more inputs relating to a mechanical design and desired motion of an industrial machine and iteratively generate an enhanced motion profile within boundaries based on the one or more inputs. The enhanced motion profile may reduce energy consumption when applied to a motor drive to control a motor of the industrial machine. The processor may also be configured to apply the enhanced motion profile to the motor drive to control the motor of the industrial machine.

DRAWINGS

These and other features, aspects, and advantages of the present disclosure will become better understood when the following detailed description is read with reference to the accompanying drawings in which like characters represent like parts throughout the drawings, wherein:

FIG. 1 is a diagrammatical representation of an exemplary control and monitoring system, in accordance with embodiments presented herein;

FIG. 2 is a block diagram of a control/monitoring device generating and applying enhanced motion profiles to motor drives to control motors of machines, in accordance with embodiments presented herein;

FIG. 3 is a block diagram of example components within a control/monitoring device, in accordance with embodiments presented herein;

FIG. 4 is a flow diagram of a method for iteratively generating and applying an enhanced motion profile, in accordance with embodiments presented herein;

FIG. 5 is a more detailed flow diagram of a method for iteratively generating and applying an enhanced motion profile that minimizes a cost function within certain boundaries, in accordance with embodiments presented herein;

FIG. 6 is a flow diagram of a method for calculating a weighting matrix related to a boundary for a maximum position error at a target position in the cost function, in accordance with embodiments presented herein;

FIG. 7 is a flow diagram of a method for calculating a weighting matrix related to a boundary for a desired trajectory in the cost function, in accordance with embodiments presented herein;

FIG. 8 is a graphical illustration in Cartesian space of trajectory boundaries, maximum error boundary at a target position, and a desired trajectory, in accordance with embodiments presented herein;

FIG. 9 is a graphical illustration in Cartesian space of the iterative progression of an enhanced motion profile trajectory, in accordance with embodiments presented herein; and

FIG. 10 is a graphical illustration of the energy consumption of the enhanced motion profile compared to other motion profiles, in accordance with embodiments presented herein.

DETAILED DESCRIPTION

One or more specific embodiments will be described below. In an effort to provide a concise description of these embodiments, not all features of an actual implementation are described in the specification. It should be appreciated that in the development of any such actual implementation, as in any engineering or design project, numerous implementation-specific decisions must be made to achieve the developers' specific goals, such as compliance with system-related and business-related constraints, which may vary from one implementation to another. Moreover, it should be appreciated that such a development effort might be complex and time consuming, but would nevertheless be a routine undertaking of design, fabrication, and manufacture for those of ordinary skill having the benefit of this disclosure.

Embodiments of the present disclosure relate to computing an enhanced motion profile that, when used as a position or velocity reference signal to control a motor connected to a machine performing a task, reduces the electrical energy consumed by the machine as compared to other motion profiles. A motion profile may refer to a reference signal to control a machine (e.g., industrial automation equipment 16) process in terms of velocity, time, and position of mechanical components of the industrial automation equipment. The techniques disclosed herein may be implemented by updating machine code with the enhanced motion profile. That is, implementation of the techniques may not depend on mechanical or electrical changes to the machine to reduce energy consumption. Further, the time for each segment (e.g., acceleration, run, deceleration, idle, and so forth) of the motion profile is maintained as defined in the machine functional specification. The time for each segment of the motion profile may not be changed while computing an enhanced motion profile that reduces energy. Instead, in some embodiments, just the shape (e.g., using the position reference signal) of the motion profile may be changed using the enhancement method. Thus, verification that the enhanced motion profile complies with the machine functional specification may be avoided, since the timing of the motion profile was not changed. In addition, the disclosed techniques may be applied to define the motion profile of a system before, for example, sizing a motor of the system. This may enable potentially selecting a more cost effective motor, motor drive, and/or gearbox solution than what would be selected without using the techniques disclosed herein. Also, the techniques disclosed herein may be used for generic single-axis systems and generic multi-axis coordinated systems. For a single-axis system, the motion profile for an index move is enhanced. For a multi-axis coordinated system (e.g., robot), a trajectory on a Cartesian space is enhanced.

In some embodiments, motor energy consumption is reduced by designing a motion profile to be used as the reference signal in a closed-loop system to drive the motor and the machine from an initial position to a target position or along a path in a pre-defined amount of time. The motor energy consumption may be reduced as the motor and the machine follow the commanded enhanced motion profile to perform the desired task. The motor energy is the integral of motor power. The motor power is the product of motor voltage and motor current. In a linear time-invariant system defined as $\dot{x} = Ax + Bu$, the energy reduction techniques disclosed herein calculate an enhanced position and/or velocity (which are some of the states in the vector $x$) profile to drive the system from the initial position to the target position by minimizing a cost function defined in terms of motor energy. In the above linear time-invariant system, $A$ represents the system matrix and $B$ represents the input matrix (also called control matrix). Accordingly, the cost function accounts for the energy cost to drive the system from the initial position to the final position during a machine cycle. In some embodiments, the motion profile may be designed to reside within certain boundaries. For example, in multi-axis coordinated systems, a first boundary may be defined about a desired trajectory in the Cartesian space, and a second boundary may be defined as the maximum position error at a target position. A motion profile trajectory within the boundaries that minimizes the energy cost function may be obtained. Once obtained, the enhanced motion profile obtained by the disclosed techniques may be used as the position (e.g., angular or linear) or velocity (e.g., angular or linear) reference signal to control the motor drives (e.g., servo drives or variable-frequency drives (VFDs)) that power the motors in the machines. For example, one of the states of the time-invariant system is position, which may be obtained from the enhanced motion profile and applied as the position reference signal to the motor drive. As may be appreciated, benefits of the embodiments disclosed herein may include reducing energy consumption and production costs in industrial machines, as well as reducing the size of motors, motor drives, and/or power supplies, among other things.

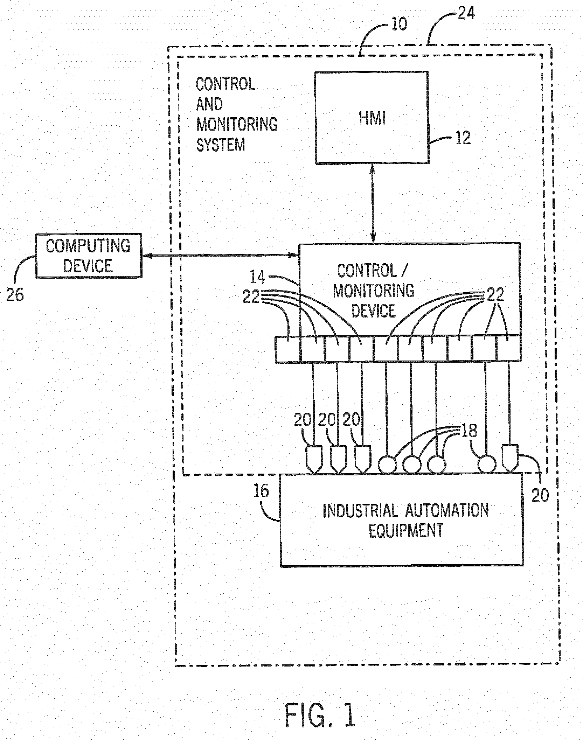

FIG. 1 is a diagrammatical representation of an exemplary control and monitoring system 10, in accordance with embodiments presented herein. In FIG. 1, the control and monitoring system 10 is illustrated as including a human machine interface (HMI) 12 and a control/monitoring device or automation controller 14 adapted to interface with devices that may monitor and control various types of industrial automation equipment 16. It should be noted that such an interface may be facilitated by the use of certain network strategies. Indeed, an industry standard network may be employed, such as Ethernet, to enable data transfer. Such networks permit the exchange of data in accordance with a predefined protocol, and may provide power for operation of networked elements. Although not depicted in FIG. 1, the control and monitoring system 10 may also include controllers, input/output (I/O) modules, motor control centers, operator interfaces, contactors, starters, motor drives, relays, network switches (e.g., Ethernet switches, modular-managed, fixed-managed, service-router, industrial, unmanaged, etc.), and the like.

The industrial automation equipment 16 may take many forms and include devices for accomplishing many different and varied purposes. For example, the industrial automation equipment 16 may include machinery used to perform various operations in a compressor station, an oil refinery, a batch operation for making food items, a mechanized assembly line, and so forth. Accordingly, the industrial automation equipment 16 may comprise a variety of operational components, such as electric motors, valves, actuators, temperature elements, pressure sensors, or a myriad of machinery or devices used for manufacturing, processing, material handling and other applications.

Additionally, the industrial automation equipment 16 may include various types of equipment that may be used to perform the various operations that may be part of an industrial application. For instance, the industrial automation equipment 16 may include electrical equipment, hydraulic equipment, compressed air equipment, steam equipment, mechanical tools, protective equipment, refrigeration equipment, power lines, hydraulic lines, steam lines, and the like. Some example types of equipment may include mixers, machine conveyors, tanks, skids, specialized original equipment manufacturer machines, and the like. In addition to the equipment described above, the industrial automation equipment 16 may also include motors, protection devices, switchgear, compressors, and the like.

In certain embodiments, one or more properties of the industrial automation equipment 16 may be monitored and controlled by certain equipment for regulating control variables. For example, sensors 18 and actuators 20 may monitor various properties of the industrial automation equipment 16 and may be involved to adjust operations of the industrial automation equipment 16, respectively.

In some cases, the industrial automation equipment 16 may be associated with devices used by other equipment. For instance, scanners, gauges, valves, flow meters, and the like may be disposed on industrial automation equipment 16. Here, the industrial automation equipment 16 may receive data from the associated devices and use the data to perform their respective operations more efficiently. For example, a controller (e.g., control/monitoring device 14) of a motor drive may receive data regarding a temperature of a connected motor and may adjust operations of the motor drive based on the data.

In certain embodiments, the industrial automation equipment 16 may include a computing device and/or a communication component that enables the industrial equipment 16 to communicate data between each other and other devices. The communication component may include a network interface that may enable the industrial automation equipment 16 to communicate via various protocols such as EtherNet/IP®, ControlNet®, DeviceNet®, or any other industrial communication network protocol. Alternatively, the communication component may enable the industrial automation equipment 16 to communicate via various wired or wireless communication protocols, such as Wi-Fi, mobile telecommunications technology (e.g., 2G, 3G, 4G, LTE), Bluetooth®, near-field communications technology, and the like.

The sensors 18 may be any number of devices adapted to provide information regarding process conditions. The actuators 20 may include any number of devices adapted to perform a mechanical action in response to a signal from a controller (e.g., the automation controller 14). The sensors 18 and actuators 20 may be utilized to operate the industrial automation equipment 16. Indeed, they may be utilized within process loops that are monitored and controlled by the control/monitoring device 14 and/or the HMI 12. Such a process loop may be activated based on process inputs (e.g., input from a sensor 18) or direct operator input received through the HMI 12. As illustrated, the sensors 18 and actuators 20 are in communication with the control/monitoring device 14. Further, the sensors 18 and actuators 20 may be assigned a particular address in the control/monitoring device 14 and receive power from the control/monitoring device 14 or attached modules.

Input/output (I/O) modules 22 may be added or removed from the control and monitoring system 10 via expansion slots, bays or other suitable mechanisms. In certain embodiments, the I/O modules 22 may be included to add functionality to the control/monitoring device 14, or to accommodate additional process features. For instance, the I/O modules 22 may communicate with new sensors 18 or actuators 20 added to monitor and control the industrial automation equipment 16. It should be noted that the I/O modules 22 may communicate directly to sensors 18 or actuators 20 through hardwired connections or may communicate through wired or wireless sensor networks, such as Hart or IOLink.

Generally, the I/O modules 22 serve as an electrical interface to the control/monitoring device 14 and may be located proximate or remote from the control/monitoring device 14, including remote network interfaces to associated systems. In such embodiments, data may be communicated with remote modules over a common communication link, or network, wherein modules on the network communicate via a standard communications protocol. Many industrial controllers can communicate via network technologies such as Ethernet (e.g., IEEE802.3, TCP/IP, UDP, EtherNet/IP, and so forth), ControlNet, DeviceNet or other network protocols (Foundation Fieldbus (H1 and Fast Ethernet) Modbus TCP, Profibus) and also communicate to higher level computing systems.

In the illustrated embodiment, several of the I/O modules 22 are configured to transfer input and output signals between the control/monitoring device 14 and the industrial automation equipment 16. As illustrated, the sensors 18 and actuators 20 may communicate with the control/monitoring device 14 via one or more of the I/O modules 22 coupled to the control/monitoring device 14.

In certain embodiments, the control/monitoring system 10 (e.g., the HMI 12, the control/monitoring device 14, the sensors 18, the actuators 20, the I/O modules 22) and the industrial automation equipment 16 may make up an industrial application 24. The industrial application 24 may involve any type of industrial process or system used to manufacture, produce, process, or package various types of items (e.g., parts). For example, the industrial applications 24 may include industries such as material handling, packaging industries, manufacturing, processing, batch processing, and the like.

In certain embodiments, the control/monitoring device 14 may be communicatively coupled to a computing device 26. Input and output signals generated from the control/monitoring device 14 may be communicated to the computing device 26. In one embodiment, data acquired by the industrial automation equipment 16 may be transmitted to the computing device 26. The computing device 26 may be a computing device that may include communication abilities, processing abilities, and the like. For example, the computing device 26 may be any general computing device that may monitor, control, and/or operate one or more of the industrial automation equipment 16. As such, the computing device 26 may be a laptop computer, a tablet computer, a mobile phone device computing device, a general personal computer, a wearable computing device, or the like. In some embodiments, the control/monitoring device 14 and/or the computing device 26 may include one or more software applications capable of determining one or more enhanced motion profiles that reduce energy consumption of certain industrial automation equipment 16. The control/monitoring device 14 and/or computing device 26 may apply the enhanced motion profile to a motor drive to control a motor and a machine to perform the desired movement, thereby reducing energy usage.

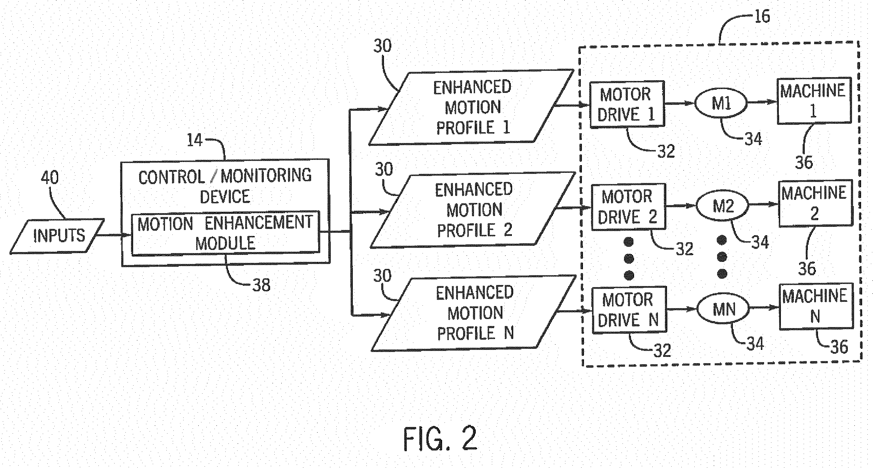

FIG. 2 is a block diagram of the control/monitoring device 14 generating and applying enhanced motion profiles 30 to motor drives 32 (motor drive 1, motor drive 2, ... motor drive n) to control motors 34 (M1, M2, ... Mn) of machines 36 (machine 1, 2, ... n), in accordance with embodiments presented herein. In some embodiments, the motors 34 (M1, M2, ... Mn) are included as part of the same machine (e.g., machine 1). The motor drives 32, the motors 34, and the machines 36 may be considered industrial automation equipment 16. As depicted, the control/monitoring device 14 may include a motion enhancement module 38 stored on one or more memories (e.g., computer-readable media). The motion enhancement module 38 may be a software application, a service, a software object, a functional module, or the like, that is capable of operating while the industrial automation equipment 16 is online or offline. For example, in some embodiments, the motion enhancement module 38 may design the enhanced motion profiles 30 while the machine(s) 36 are in the design stage (e.g., the physical machine(s) 36 are not yet built). The motion enhancement module 38 may include control algorithms implemented as instructions that perform the techniques disclosed herein. In some embodiments, the motion enhancement module 38 may function inside a software tool that enables a user to size and select a solution of motors 34, motor drives 32, and/or related accessories for their industrial automation application 24. Inside this software tool, the motion enhancement module 38 can then be used to generate an enhanced motion profile 30 for the solution. Criteria for selection of the solution may include bill of material cost, physical size, energy usage, and the like. It should be understood that although the motion enhancement module 38 is depicted as residing in the control/monitoring device 14, the motion enhancement module 38 may be located in other computing devices (e.g., computing device 26, HMI 12, a workstation) communicatively coupled to the control/monitoring device 14 and/or the drives 32. In some embodiments, when the enhanced motion profiles 30 are designed while the machine 36 is in the design stage, the enhanced motion profiles 30 may be manually imported into the machine code that resides in the control/monitoring device 14 and not imported over a communication interface.

In some embodiments, the motion enhancement module 38 may include functionality for generating an enhanced motion profile 30 that reduces motor 34 energy consumption for each motor drive 32 in the industrial application 24, as described in detail below. The motion enhancement module 38 may receive various inputs 40 that are used to generate the enhanced motion profile(s) 30. The inputs 40 may generally relate to a desired performance of the industrial automation equipment 16 and may vary based on whether the system is a single-axis system or a multi-axis coordinated system. For example, in a single-axis system, the inputs 40 may include a target position, a move time, and/or a state-space equation describing the mechanical system. In a multi-axis coordinated system, the inputs 40 may include a desired trajectory in the Cartesian space, boundaries in the Cartesian space, and/or the mechanical data to compute the kinetic model of the system. Cartesian space may refer to two or more dimensions and associated coordinates for each point in space. The enhanced motion profiles may include a position (e.g., angular or linear) or velocity (e.g., angular or linear) reference signal for the motor drive 32 for various times over the move time. Thus, as previously noted, the enhanced motion profile 30 may be implemented without making mechanical or electrical changes to the industrial automation equipment 16.

The mechanical data may be used to generate the state-space equation of the mechanical system. In some embodiments, a mechanical design (drawings of parts and assemblies of the mechanical system connected to a motor to allow calculating inertias, equations of motion, kinematic equations, etc.) or manufacturer specification (datasheet information that allows to obtain parameter values for the equations of motion, kinematic equations, etc. of mechanical components that constitute the mechanical system connected to a motor) that includes machine mechanics connected to the motor 32 may be used. The mechanics may include the transmission mechanism, ballscrew, and other related components. The mechanical design may be considered when performing calculations to model the mechanical system using the state-space equation and/or other equations to determine an enhanced motion profile 30. Further, the mechanical design may be considered in calculations (e.g., modeling) that size and select solutions of motors and motor drives for the industrial automation application 24 because the mechanical design may impact the power/energy rating of the motor and motor drive and, therefore, the physical size of the motor and motor drive and the associated cost. In one particular example of a mathematical function used to represent the physical operational behavior of the machine, the amount of torque (7) or force that is used by the industrial automation equipment 16 is a function of the inertia or mass of the mechanical system and the motion profile that is executed. Friction ($Tf$) and other external load forces may also be included in the equation. Thus, the developed motor torque ($T$) required for a rotary motor to accelerate (*alpha*) a load with inertia ($J$) is represented below:

$$T = J * alpha + Tf \qquad \text{Equation (1)}$$

It should be understood that $J$ may include the effect of masses (m) from linear systems (m $\times$ r$^2$), where m is the mass of the mechanics or the load under linear motion, and r is the radius of the mechanical component (roll, pulley, etc.) that translates rotary motion into linear motion. In that case, $J$ = motor inertia + load inertia, where the load inertia is calculated from the mechanical system characteristics (e.g., mechanical design of the ballscrew or gearbox).

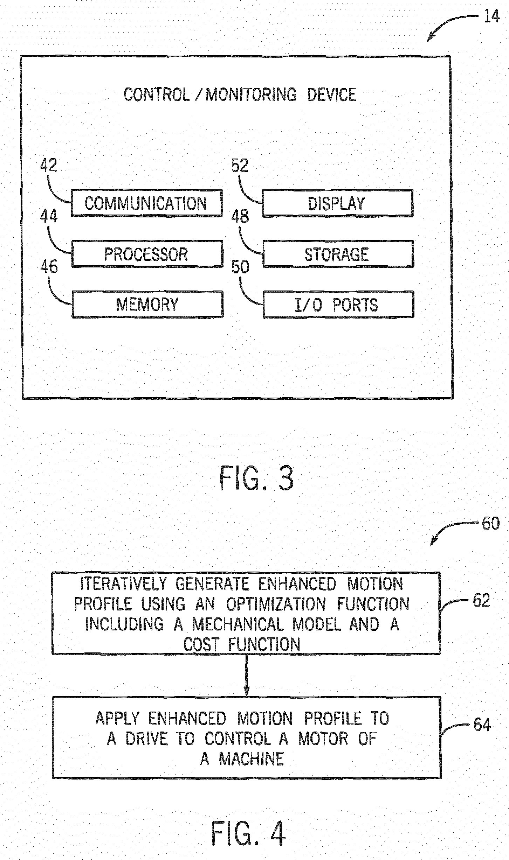

FIG. 3 is a block diagram of example components within the control/monitoring device 14, in accordance with embodiments disclosed herein. For example, the control/monitoring device 14 may include one or more communication components 42, processors 44, memories 46, storages 48, input/output (I/O) ports 50, displays 52, and the like. The communication component 42 may be a wireless or wired communication component that may facilitate communication with the industrial automation equipment 16, the HMI 12, the computing device 26, and/or other communication capable devices.

The processor 44 may be any type of computer processor or microprocessor capable of executing computer-executable code. The processor 44 may also include multiple processors that may perform the operations described below. The memory 46 and the storage 48 may be any suitable articles of manufacture that can serve as media to store processor-executable code, data, or the like. These articles of manufacture may represent computer-readable media (e.g., any suitable form of memory or storage) that may store the processor-executable code used by the processor 44 to perform the presently disclosed techniques. For example, the motion enhancement module 38 may include processor-executable code (e.g., instructions) that is stored on the memory 46 and/or storage 48. Generally, the processor 44 may execute software applications, such as the motion enhancement module 38, that include programs that generate, display, select, and/or implement enhanced motion profiles 30 on the motor drives 32 that control the motors 34 connected to the machines 36 to reduce energy consumption, among other things described in detail below.

The memory 46 and the storage 48 may also be used to store data, analysis of the data, the software applications, and the like. The memory 46 and the storage 48 may represent non-transitory computer-readable media (e.g., any suitable form of memory or storage) that may store the processor-executable code used by the processor 44 to perform various techniques described herein. It should be noted that non-transitory merely indicates that the media is tangible and not a signal.

The I/O ports 50 may be interfaces that may couple to other peripheral components such as input devices (e.g., keyboard, mouse), sensors, input/output (I/O) modules 22, and the like. As discussed above, I/O modules 22 may enable the control/monitoring device 14 to communicate with the industrial automation equipment 16 or other devices in the industrial automation system via the I/O modules 22.

The display 52 may depict visualizations associated with software (e.g., motion enhancement module 38) or executable code being processed by the processor 30. In one embodiment, the display 52 may be a touch display capable of receiving inputs from a user of the control/monitoring device 14. As such, the display 52 may serve as a user interface to communicate with the industrial automation equipment 16. The display 52 may be used to display a graphical user interface (GUI) for operating the industrial automation equipment 16, for selecting an enhanced motion profile 30 that includes an enhanced index move (e.g., for single-axis systems) or enhanced trajectory (e.g., for multi-axis systems), for performing various procedures for the industrial automation equipment 16, and the like. The display 52 may be any suitable type of display, such as a liquid crystal display (LCD), plasma display, or an organic light emitting diode (OLED) display, for example. In some embodiments, the display 52 may display a visualization of the enhanced motion profiles 30 that are generated, and a user may select which enhanced motion profiles 30 to apply, approve the enhanced motion profiles 30, reject the enhanced motion profiles 30, or the like.

Although the components described above have been discussed with regard to the control/monitoring device 14, it should be noted that similar components may make up the computing device 26 and/or the HMI 12. Moreover, the control/monitoring device 14 may also be part of the industrial automation equipment 16, and thus may monitor and control certain operations of the industrial automation equipment 16. Further, it should be noted that the listed components are provided as example components, and the embodiments described herein are not to be limited to the components described with reference to FIG. 3.

FIGS. 4-7 are flow diagrams of various methods. Although the following description of the methods for FIGS. 4-7 are described as being performed by the processor 44 of the control/monitoring device 14, it should be noted that the methods may be performed by other processors disposed in other devices that may be capable of communicating with the motor drives 32, such as the computing device 26, the HMI 12, or other components associated with the industrial application 24. Additionally, although the following methods describe a number of operations that may be performed, it should be noted that the methods may be performed in a variety of suitable orders, and all of the operations may not be performed. It should be appreciated that the methods may be wholly executed by the control/monitoring device 14 or the execution may be distributed between the computing device 26 and/or the control/monitoring device 14. It should be noted that the methods may be implemented as computer instructions included in the motion enhancement module 38 stored on the memory 46.

FIG. 4 is a flow diagram of a method 60 for iteratively generating and applying an enhanced motion profile 30, in accordance with embodiments presented herein. The processor 44 may iteratively generate an enhanced motion profile 30 using an optimization method including a mechanical model and a cost function (block 62). For example, the optimization method may compute the motion profile of the motor 34 angular position in an index (point-to-point) move in a single-axis system or in a trajectory in the Cartesian space in a multi-axis coordinated system. The mechanical model may include a state-space equation defined as $\dot{x} = Ax + Bu$.

The cost function $J$ that may be used for either a single-axis system or a multi-axis coordinated system may be expressed in accordance with the follow relationship:

$$J = \frac{1}{2}\left(Cx(T) - r_d(T)\right)^T P\left(Cx(T) - r_d(T)\right) + \frac{1}{2}\int_{t_0}^{T}[(Cx - r_d)^T Q(Cx - r_d) + u^T Ru]dt \qquad \text{Equation (2)}$$

where $T$ is the final time of the trajectory, $r_d$ is the desired reference trajectory within the interval of time $[t_0, T]$, $P$ is a weight matrix that determines the cost with the accuracy to reach the target position, $Q$ is a real symmetric positive semi-definite matrix in which each element of the matrix weights the states to track the desired trajectory $r_d$, and $R$ is a real symmetric positive definite weighting matrix that determines the cost associated with energy. In other words, $P$ is a weighting matrix for the boundary for the maximum position error at the target position and $Q$ is a weighting matrix for the boundary about the desired trajectory in the Cartesian space. In some embodiments, the maximum error may be defined based on the machine functional specifications, or may be defined by a user. The boundaries may be application dependent.

The optimization method may enhance the control effort $u(t)$ and the states $x$ of the state-space equation that model the mechanical system. In some embodiments, when applying the optimization method with industrial automation equipment 16, the enhanced control input $u(t)$ may not be relevant, since the reference used to control the system and reduce the energy is the enhanced motion profile 30 of the angular motor position (e.g., one of the states $x$). However, in some embodiments, the control input $u(t)$ may be relevant and used to reduce energy consumption.

Several techniques may be used to solve the energy optimization problem and obtain an enhanced motion profile 30 to apply to the motor drive 32. For example, in one embodiment, the optimization method may use a Hamiltonian equation that solves the optimization problem according to the Pontryagin Maximum (or Minimum) Principle. The Hamiltonian equation may be defined as:

$$H = L + \lambda^T f \qquad \text{Equation (3)}$$

where $L$ is the cost function, $\lambda$ is a Lagrange multiplier, and $f$ is the state-space system equation ($Ax + Bu$). As may be appreciated, the Pontryagin's Maximum (or Minimum) Principle is used to compute a control effort that takes a system from the initial condition to the final condition with minimum cost. The optimal control effort is found by minimizing the Hamiltonian equation in equation 3 at each instant $t$. Simultaneously, the enhanced position profile (one of the states $x$) or enhanced velocity profile (one of the states $x$) are also computed. The enhanced motion profile (position and/or velocity) is obtained by calculating a control input $u$ to drive the system from the initial position to the final position by minimizing the cost function. The enhanced position motion profile or the enhanced velocity motion profile is the outcome of this energy enhancement method that will be used to control the drive motors 32 in a machine 36 in order to minimize energy consumption. The state-space function and the appropriate cost function may be substituted into equation 3 for $L$. Thus, equation 3 may be expressed as follows:

$$H = \frac{1}{2}(Cx - r_d)^T Q(Cx - r_d) + \frac{1}{2}u^T Ru + \lambda^T(Ax + Bu)$$

$$\text{Equation (4)}$$

The processor 44 may iteratively compute the enhanced motion profile 30 until a solution is obtained that minimizes the energy cost function within the boundaries. In some embodiments, the processor 44 may iteratively generate the enhanced motion profile 30 until one is found that resides within the boundaries. Once the enhanced motion profile is generated that resides within the boundaries, the processor 44 may search for an enhanced motion profile 30 that minimizes the cost function. As described in detail below, the weighting matrices may be recalculated until the enhanced motion profile trajectory is within the boundaries (e.g., for desired trajectory and maximum error at a target position) and minimizes the energy cost function. As previously discussed, the enhanced motion profile 30 may include a position (e.g., angular or linear) or velocity (e.g., angular or linear) reference signal applied to the motor drives 32 for various times over the move time. The processor 44 may apply the obtained enhanced motion profile 30 to the motor drive 32 to control the motor 34 of the machine 36 (block 64), thereby reducing energy consumption.

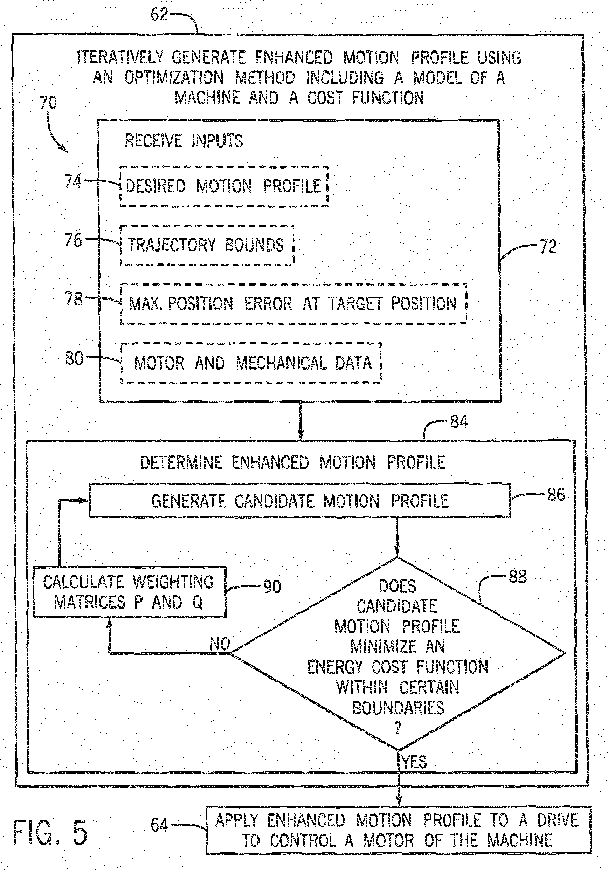

FIG. 5 is a more detailed flow diagram of a method 70 for iteratively generating and applying an enhanced motion profile 30 that minimizes a cost function within certain boundaries, in accordance with embodiments presented herein. The method 70 may be included in block 62 of method 60 in FIG. 4. The processor 44 may receive inputs (block 72). In some embodiments, the inputs may be received from one or more other software applications, modules, services, and/or objects. For example, the inputs may be received from a communicatively coupled device such as the industrial automation equipment 16, the computing device 26, and/or the HMI 12. Further, the inputs may be received by the processor 44 after being entered by the user using an input peripheral (e.g., mouse, keyboard, and so forth) or the display 52. The inputs may include a desired motion profile 74, a trajectory boundary 76, a maximum position error at a target position boundary 78, and/or motor and mechanical data 80.

The desired motion profile 74 may be based on a desired move time, move distance, a desired index move when enhancing the motion profile for single-axis systems, and/or a desired trajectory in the Cartesian space when enhancing the motion profile for multi-axis coordinated systems (e.g. robots), or the like. The trajectory boundary 76 may be defined as a certain distance away from the desired trajectory that results from the desired motion profile 74 and the difference between a trajectory enabled by the enhanced motion profile and the desired trajectory enabled by the desired motion profile 74 is minimized by the weighting matrix $Q$ in the cost function. The maximum position error at the target position boundary 78 may be defined based on the machine functional specifications, or may be defined by the user. For example, the target position may relate to the target position of an end-effector of the industrial automation equipment 16 and the maximum position error may be defined as a certain error from the target position that is acceptable. The maximum position error at the target position boundary 78 may be minimized by the weighting matrix $P$ in the cost function. Further, the motor and mechanical data 80 may be used by the processor 44 to generate the mechanical model of the system by defining the state-space equation described above. Also, the motor and mechanical data 80 may indicate whether the system is single-axis or a multi-axis coordinated system.

Based on the inputs, the processor 44 may determine the enhanced motion profile 30 (block 84). The processor 44 may generate a candidate motion profile (block 86). In some embodiments, the candidate motion profile may be generated using the optimization method. An iterative method is used to determine the weighting matrices (e.g., $P$, $Q$, and/or $R$) that yield an enhanced motion profile 30 (e.g., angular position, linear position, angular velocity, and/or linear velocity reference signal) that results in a trajectory in the Cartesian space for multi-axis systems or index move for single-axis systems within the boundaries 76 and 78 with the lowest energy cost. Thus, arbitrary (e.g., random) initial values may initially be selected for the weighting matrices because the iterative method may converge on an optimal solution independently of the initial values assigned to the weighting matrices. That is, the weighting matrices may be recalculated at each iteration to progressively design a motion profile that moves closer and closer at each iteration to reside inside the boundaries 76 and 78 (e.g., in the Cartesian space for multi-axis systems). Once the enhanced motion profile 30 resides inside the boundaries 76 and 78, the iterative process continues to compute the enhanced motion profile 30 that produces an enhanced trajectory or index move inside the boundaries 76 and 78 with the lowest energy cost. In some embodiments, the iterations stop when the energy converges to the lowest level.

Accordingly, the processor 44 may determine whether the candidate motion profile minimizes the energy cost function within the trajectory boundary 76 and the maximum position error at a target position boundary 78 (block 88). Once the iterative optimization process starts, if the candidate motion profile does not minimize the energy cost function within the boundaries 76 and 78, then the processor 44 may calculate (if it is the first iteration and random initial values were selected for the weighting matrices) or recalculate the weighting matrices $P$ and $Q$ (block 90). After the weighting matrices are recalculated, the processor 44 may proceed to generate another candidate motion profile using the optimization method (block 86). As mentioned above, the processor 44 may continue the iterations until $P$ and $Q$ converge to values that yield an enhanced motion profile 30 that is within the boundaries 76 and 78 with the lowest energy cost. If such an enhanced motion profile is found, the processor 44 may apply the enhanced motion profile 30 (e.g., position-reference signal) to the drive 32 to control the motor 34 of the machine 36 (block 64), thereby reducing energy consumption.

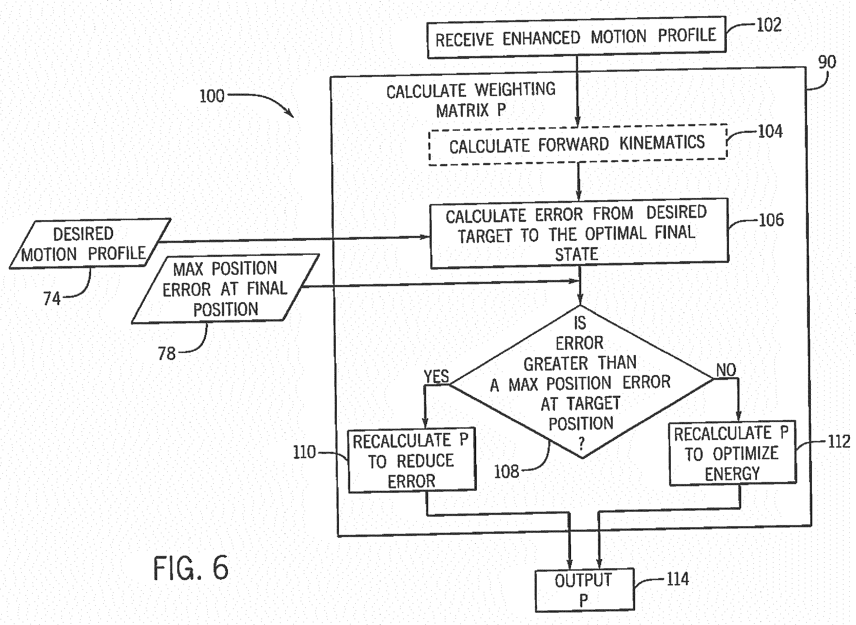

FIG. 6 is a flow diagram of a method 100 for calculating a weighting matrix (e.g., $P$) related to the boundary 78 for a maximum position error at the target position in the cost function, in accordance with embodiments presented herein. As previously discussed, weighting matrix $P$ is used to maximize the accuracy in reaching the target position. In the iterative method 70 of FIG. 5, $P$ is recalculated (block 90) at each iteration to force the final state of the enhanced motion profile 30 into the boundary 78 defined by the maximum error at the target position.

Referring now to method 100, the processor 44 may receive the enhanced motion profile 30 (e.g., angular position, linear position, angular velocity, and/or linear velocity reference signal) (block 102). The processor 44 may calculate weighting matrix $P$ (block 90). The forward kinematics (a set of equations of a mechanical system that are used to compute the motion of the end-effector based on the motion of the motors) may be used to compute the position of an end-effector in the Cartesian space at the end of the move (optimal final state) when optimizing the trajectory of multi-axis coordinated systems, e.g. robots (optional block 104). Block 90 may also include the processor 44 calculating an error from a desired target position to the optimal final state (final position achieved with the enhanced motion profile) (block 106). This calculation may use the desired motion profile 74 that results in a desired trajectory to obtain the desired target position. Block 90 may further include determining whether the error at the end of the move between the desired target position and the final position achieved with the enhanced motion profile 30 is greater than a maximum desired position error at the target position boundary 78 (block 108). If the error is greater than the maximum position error at the target position boundary 78, then the processor 44 may recalculate the weighting matrix $P$ (block 110) to reduce the error. If the error is less than the maximum desired position error at the target position boundary 78, then the processor 44 may recalculate $P$ to reduce (optimize) the energy consumption of the system (block 112). The processor 44 may then output $P$ to be used in the optimization method to generate another candidate enhanced motion profile 30 (block 114).

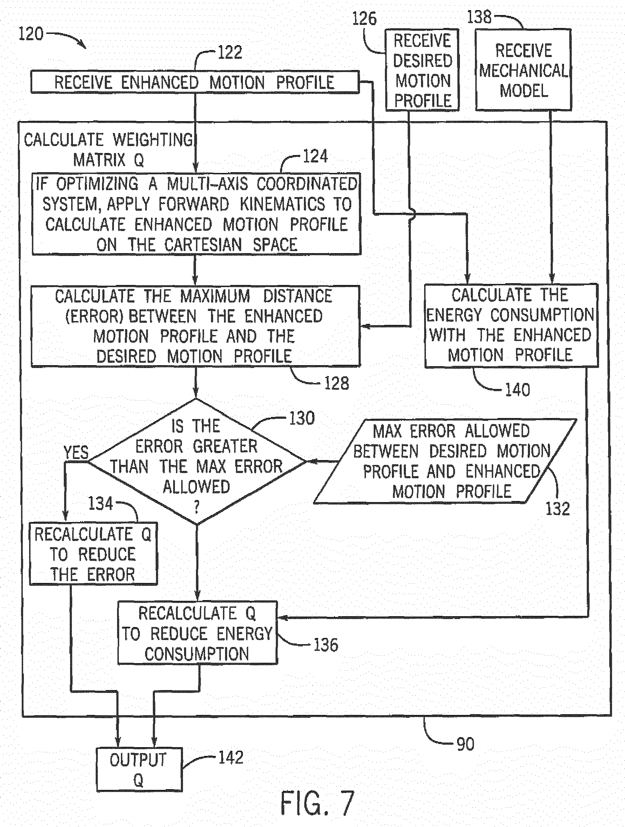

FIG. 7 is a flow diagram of a method 120 for calculating a weighting matrix (e.g., $Q$) related to a boundary 76 for a desired trajectory in the cost function, in accordance with embodiments presented herein. The iterative recalculation of the weighting matrix $Q$ may be largely responsible for moving a trajectory enabled by the enhanced motion profile 30 towards a region defined by the trajectory boundary 76 in block 90 of the iterative method 70 of FIG. 5.

Referring now to the method 120, the processor 44 may receive the enhanced motion profile 30 (e.g., angular position, linear position, angular velocity, and/or linear velocity) (block 122). The processor 44 may calculate weighting matrix $Q$ (block 90). In some embodiments, if optimizing a multi-axis coordinated system, the processor 44 may apply forward kinematics to calculate the enhanced motion profile 30 in the Cartesian space (block 124). The processor 44 may also receive the desired motion profile (but, not necessarily optimized (enhanced) to minimize energy consumption) (block 126). Block 90 may also include the processor 44 calculating the maximum distance (error) between the enhanced motion profile 30 and the desired motion profile (block 128). The processor 44 may determine whether the error is greater than the maximum error allowed between the desired motion profile and the enhanced motion profile 30 (block 130). Accordingly, at block 130, the processor 44 may receive the maximum error allowed between the desired motion profile and the enhanced motion profile 30 (block 132). If the error is greater than the maximum error allowed 132, then the processor 44 may recalculate the weighting matrix Q to reduce the error (block 134).

If the error is not greater than the maximum error allowed 132, then the processor 44 may recalculate the weighting matrix $Q$ to reduce the energy consumption (block 136). Accordingly, the processor 44 may receive a mechanical model and, using the mechanical model, calculate the energy consumption with the enhanced motion profile 30 (block 140). The processor 44 may then output Q (block 142) to be used in the optimization method to generate another candidate enhanced motion profile.

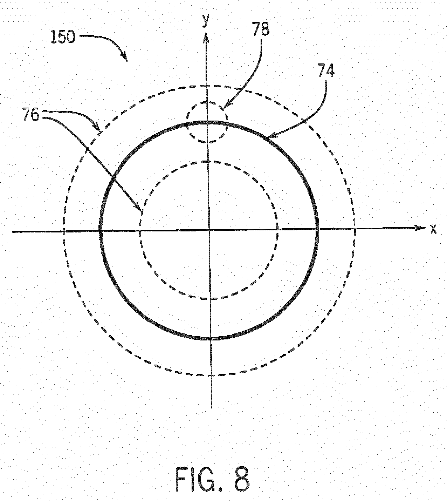

FIG. 8 is a graphical illustration in Cartesian space 150 ($x$ and $y$ axes) of trajectory boundaries 76, maximum position error at a target position boundary 78, and a desired trajectory 74, in accordance with embodiments presented herein for a multi-axis coordinated system, e.g. robot. The iterative optimization method may search for an enhanced motion profile trajectory that fits within the boundaries 76 and 78 and minimizes the energy cost function to apply to the drive 32. As depicted, the boundaries 76 for the trajectory extend equidistant from both sides of the desired trajectory 74. Further, the maximum position error at the target position boundary 78 includes a circle having a certain radius in this example. The maximum position error at the target position boundary 78 is defined by the application and may have any shape and size. It should be noted that the user may define the distance of the boundaries 76 and/or the radius of the circle of the boundary 78 or the distance and/or radius may be preconfigured. Further, in some embodiments, the desired trajectory 74 may be defined by a move time and/or a radius of a circular path provided by a user, preconfigured, or may be chosen based on the machine functional specifications. The boundary 76 is defined by the application of the system and may also have any shape and size as long as it encloses the desired trajectory that is also defined by the application and may have any shape and size within the limitations of the system.

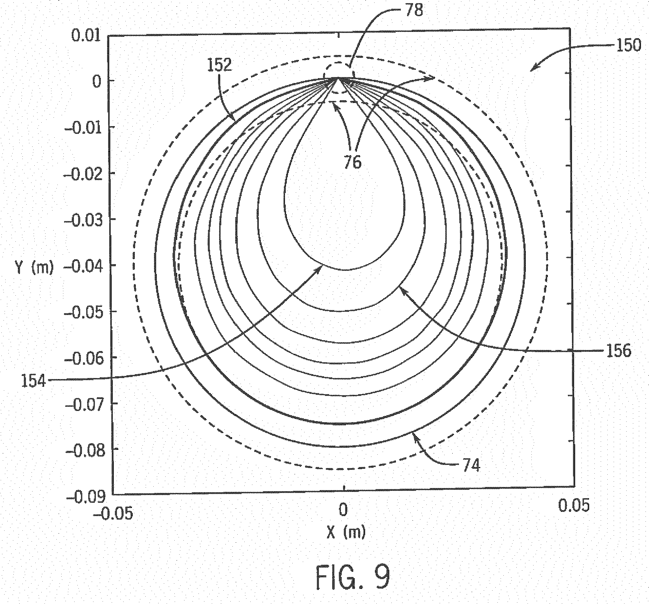

FIG. 9 is a graphical illustration in Cartesian space 150 of the iterative progression of an enhanced motion profile 152, in accordance with embodiments presented herein. As depicted, the Cartesian space 150 includes the boundaries 76 for the desired trajectory, the maximum position error at the target position boundary 78, and the desired trajectory 74. As may be understood, the trajectories may be generated by the optimization method described above, and the weighting matrices (e.g., $P, Q,$ and/or $R$) may be recalculated at each iteration to move the trajectory until it is within the boundaries 76 and 78 and minimizes the energy consumption by optimizing the energy cost function. It should be noted that the disclosed techniques may enable selecting any random initial values of the weighting matrices $P, Q,$ and/or $R$ of the cost function because the iterative method converges to a trajectory within the boundaries 76 and 78 independent of the initial values.

Accordingly, as depicted, an initial trajectory 154 starts out with a $Q$ matrix that is outside the boundaries 76 of the desired trajectory 74. As such, the processor 44 recalculates $Q$ (block 138). However, in the next iteration, another trajectory 156 is generated that has a $Q$ matrix that is also outside the boundaries 76 of the desired trajectory 74. As such, the processor 44 recalculates $Q$ (block 138) again. The techniques may iterate similarly until the enhanced motion profile 152 is found that fits within the boundaries 76 for the desired trajectory 74. Likewise, the processor 44 may increase or decrease weighting matrix $P$ at each iteration until the enhanced motion profile 152 is found that fits within the boundary 78 for the maximum position error at the target position. It should be noted that the depicted enhanced motion profile 152 may include a trajectory and represent an embodiment of the enhanced motion profile 30 for a multi-axis coordinated system.

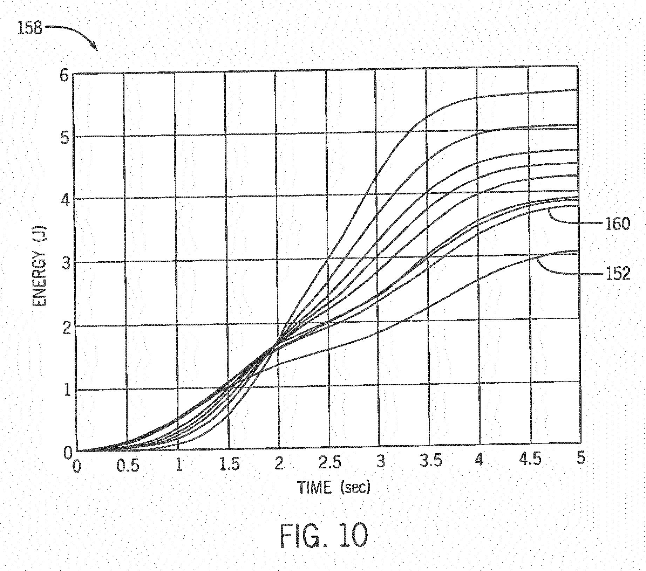

FIG. 10 is a graphical illustration 158 of the energy consumption of the enhanced motion profile 152 compared to other motion profiles typically used in industrial applications, in accordance with embodiments presented herein. The graph 158 includes the amount of energy consumed in Joules on the y-axis and the amount of time in seconds on the x-axis. The motion profiles were applied to perform the same desired circular trajectory as the enhanced motion profile trajectory 152. The eight motion profiles include the 5$^{th}$-order polynomial, 7$^{th}$-order polynomial, 9$^{th}$-order polynomial, sine, trapezoidal, cycloidal, modsine, and cubic profile. Such motion profiles are typical in industrial applications. The graph 158 depicts the total energy that resulted from the system performing each one of the motion profiles. As depicted, the enhanced motion profile 152 produced the lowest total energy (e.g., ~3.05 joules) and the cubic motion profile trajectory 160 produced the second lowest total energy (e.g., ~3.7 joules). Thus, the enhanced motion profile trajectory 152 saved nearly 23 percent in totally energy as compared to the lowest consuming motion profile trajectory. The energy savings increase when compared to the other motion profiles besides the cubic.

Technical effects of the embodiments described herein include generating an enhanced motion profile 30 that, when used as a position or velocity reference signal in a drive 32 to control a motor 34 connected to a machine 36 performing a task, reduces the electrical energy consumed by the machine 36 as compared to other motion profiles. In some embodiments, an iterative method may be used to generate the enhanced motion profile 152 so that the profile 152 fits within certain boundaries 76 and 78 while minimizing an energy cost function. Each iteration may recalculate the weighting matrices of the cost function that represent the boundaries 76 and 78 until the boundaries are satisfied. Also, the techniques may be used for single-axis systems and multi-axis coordinated systems. The techniques disclosed herein may be implemented in the actual physical system by simply updating machine code with the enhanced motion profile. For example, in some embodiments, the machine code may be saved in the memory 46 of the control/monitoring device 14 and executed by the processor 44 to control the machine. That is, implementation of the techniques may not depend on mechanical or electrical changes to the machine to reduce energy consumption.

In the preceding specification, various embodiments have been described with reference to the accompanying drawings. It will, however, be evident that various modifications and changes may be made thereto, and additional embodiments may be implemented, without departing from the scope of the

claims. The specification and drawings are accordingly to be regarded in an illustrative rather than restrictive sense.

**Claims**

1. A tangible, non-transitory computer readable medium (48) storing instructions that, when executed by a processor (44), cause the processor (44) to:

   receive one or more inputs (40) relating to a mechanical design and desired motion of an industrial machine (36);
   iteratively generate a motion profile (30) within boundaries (76, 78) based on the one or more inputs (40), wherein the motion profile (30) reduces energy consumption when applied to a motor drive (32) to control a motor (34) connected to the industrial machine (36), wherein at least one of the boundaries comprises a boundary defined around a desired trajectory (74),
   wherein the boundaries (76, 78) are represented by weighting matrices in a cost function, and wherein iteratively generating, via the processor (44), the motion profile (30) within the boundaries (76, 78) based on the one or more inputs (40) comprises recalculating the weighting matrices at each iteration when the motion profile (30) is not within the boundaries (76, 78) represented by the weighting matrices; and
   wherein, once the motion profile (30) is within the boundaries (76, 78), the weighting matrices continue to be iteratively recalculated until the weighting matrices converge to a solution that yields a motion profile (30) within the boundaries (76, 78) that has a minimum energy cost; and
   apply the motion profile trajectory to the motor drive (32) to control the motor (34) connected to the industrial machine (36).

2. The computer readable medium of claim 1, wherein at least one of the boundaries comprises a boundary defined as a maximum position error at a target position for an end-effector of the industrial machine.

3. The computer readable medium of one of claims 1 to 2, wherein the one or more inputs comprise a desired trajectory, a desired trajectory boundary, a maximum position error at a target position boundary, motor and mechanical data, or some combination thereof.

4. The computer readable medium of one of claims 1 to 3, wherein the instructions, when executed by the processor, cause the processor to iteratively generate the motion profile using a Hamiltonian equation that includes a mechanical model in the form of a state-space equation and a cost function.

5. The computer readable medium of one of claims 1 to 4, wherein the motion profile comprises an angular position reference signal, a linear position reference signal, an angular velocity reference signal, a linear velocity reference signal, or some combination thereof.

6. The computer readable medium of one of claims 1 to 5, wherein the instructions, when executed by the processor, cause the processor to apply the motion profile to the motor drive so that the motor drive implements the motion profile by updating machine code of the motor drive without making mechanical or electrical changes to the industrial machine.

7. A method (60), comprising:

   receiving (72), by a processor (44), one or more inputs (40) relating to a mechanical design and desired motion of an industrial machine (36);
   iteratively generating (84), via the processor (44), a motion profile (30) within boundaries (76, 78) based on the one or more inputs (40), wherein the motion profile (30) reduces energy consumption when applied to a motor drive (32) to control a motor (34) connected to the industrial machine (36), wherein at least one of the boundaries comprises a boundary defined around a desired trajectory (74),
   wherein the boundaries (76, 78) are represented by weighting matrices in a cost function, and wherein iteratively generating, via the processor (44), the motion profile (30) within the boundaries (76, 78) based on the one or more inputs (40) comprises recalculating the weighting matrices at each iteration when the motion profile (30) is not within the boundaries (76, 78) represented by the weighting matrices; and
wherein, once the motion profile (30) is within the boundaries (76, 78), the weighting matrices continue to be iteratively recalculated until the weighting matrices converge to a solution that yields a motion profile (30) within the boundaries (76, 78) that has a minimum energy cost; and
applying (64), via the processor (44), the motion profile (30) to the motor drive (32) to control the motor (34) connected to the industrial machine (36).

8. The method of claim 7, comprising displaying the motion profile as a visualization on a display; or comprising iteratively searching, via the processor, for the motion profile that minimizes an energy cost function once the motion profile is within the boundaries.

9. The method of claim 7, wherein the boundaries comprise a first boundary defined around the desired trajectory and a second boundary defined as a maximum position error at a target position.

10. A system, comprising:

an industrial machine (36) comprising a motor (34) and a motor drive (32); and
a control/monitoring device (14) comprising a processor (44) configured to:

receive one or more inputs (40) relating to a desired performance of the industrial machine;
iteratively generate (84) a motion profile (30) within boundaries (76, 78) based on the one or more inputs (40), wherein the motion profile (30) reduces energy consumption when applied to the motor drive (32) to control the motor (32) of the industrial machine (36), wherein at least one of the boundaries comprises a boundary defined around a desired trajectory (74),
wherein the boundaries (76, 78) are represented by weighting matrices in a cost function, and wherein iteratively generating, via the processor (44), the motion profile (30) within the boundaries (76, 78) based on the one or more inputs (40) comprises recalculating the weighting matrices at each iteration when the motion profile (30) is not within the boundaries (76, 78) represented by the weighting matrices; and
wherein, once the motion profile (30) is within the boundaries (76, 78), the weighting matrices continue to be iteratively recalculated until the weighting matrices converge to a solution that yields a motion profile (30) within the boundaries (76, 78) that has a minimum energy cost; and
apply (64) the motion profile (30) to the motor drive (32) to control the motor (34) of the industrial machine (36).

11. The system of claim 10, wherein the cost function is defined in terms of energy.

12. The system of claim 10, wherein the boundaries comprise a first boundary defined around the desired trajectory and a second boundary that comprises a maximum position error at a target position, the first and second boundaries are accounted for by a first weighting matrix and a second weighting matrix, respectively, in the cost function, and the first weighting matrix and the second weighting matrix are recalculated at each iteration when the motion profile is not within the boundaries.

**Patentansprüche**

1. Gegenständliches, nicht-flüchtiges computerlesbares Medium (48), das Befehle enthält, die bei Ausführung durch einen Prozessor (44) bewirken, dass der Prozessor (44):

eine oder mehrere Eingaben (40) bezüglich eines mechanischen Aufbaus und einer Sollbewegung einer industriellen Maschine (36) empfängt;
ein Bewegungsprofil (30) innerhalb von Grenzen (76, 78) auf der Grundlage der einen oder mehreren Eingaben (40) iterativ erzeugt, wobei das Bewegungsprofil (30) den Energieverbrauch reduziert, wenn eine Motoransteuerung (32) zur Steuerung eines Motors (34) verwendet wird, der mit der industriellen Maschine (36) verbunden ist, wobei mindestens eine der Grenzen eine Grenze umfasst, die um eine Sollbahn (74) herum festgelegt ist, wobei die Grenzen (76, 78) durch Gewichtungsmatrizen in einer Kostenfunktion repräsentiert werden, und wobei iteratives Erzeugen, mittels des Prozessors (44), des Bewegungsprofils (30) innerhalb der Grenzen (76, 78) auf der Grundlage der einen oder mehreren Eingaben (40) umfasst: erneutes Berechnen der Gewichtungsmatrizen bei jeder Iteration, wenn das Bewegungsprofil (30) nicht innerhalb der durch die Gewichtungsmatrizen repräsentierten Grenzen (76, 78) liegt; und

wobei die Gewichtungsmatrizen weiterhin iterativ erneut berechnet werden, bis die Gewichtungsmatrizen zu einer Lösung konvergieren, die ein Bewegungsprofil (30) innerhalb der Grenzen (76, 78) ergibt, die minimale Energiekosten hat, sobald das Bewegungsprofil (30) innerhalb der Grenzen (76, 78) liegt; und

die Bewegungsprofilbahn auf die Motoransteuerung (32) zur Steuerung des Motors (34), der mit der industriellen Maschine (36) verbunden ist, anwendet.

2. Computerlesbares Medium nach Anspruch 1, wobei mindestens eine der Grenzen eine Grenze beinhaltet, die als ein maximaler Positionsfehler an einer Sollposition für ein Greiforgan der industriellen Maschine festgelegt ist.

3. Computerlesbares Medium nach Anspruch 1 oder 2, wobei die eine oder die mehreren Eingaben eine Sollbahn, eine Sollbahngrenze, einen maximalen Positionsfehler an einer Sollpositionsgrenze, Motor und mechanische Daten oder eine Kombination davon umfassen.

4. Computerlesbares Medium nach einem der Ansprüche 1 bis 3, wobei die Befehle, wenn sie von dem Prozessor ausgeführt werden, bewirken, dass der Prozessor iterativ das Bewegungsprofil unter Anwendung einer Hamilton-Gleichung erzeugt, die ein mechanisches Modell in Form einer Zustandsraumgleichung und einer Kostenfunktion enthält.

5. Computerlesbares Medium nach einem der Ansprüche 1 bis 4, wobei das Bewegungsprofil ein Winkelpositionsreferenzsignal, ein Referenzsignal für eine geradlinige Position, ein Winkelgeschwindigkeitsreferenzsignal, ein Referenzsignal für eine lineare Geschwindigkeit oder eine Kombination davon umfasst.

6. Computerlesbares Medium nach einem der Ansprüche 1 bis 5, wobei die Befehle, wenn sie von dem Prozessor ausgeführt werden, bewirken, dass der Prozessor das Bewegungsprofil auf die Motoransteuerung derart anwendet, dass die Motoransteuerung das Bewegungsprofil implementiert, indem Maschinencode der Motoransteuerung aktualisiert wird, ohne dass mechanische oder elektrische Änderungen an der industriellen Maschine vorgenommen werden.

7. Verfahren (60), mit:

Empfangen (72), durch einen Prozessor (44), einer oder mehrerer Eingaben (40), die einen mechanischen Aufbau und eine Sollbewegung einer industriellen Maschine (36) betreffen;

iteratives Erzeugen (84), durch den Prozessor (44), eines Bewegungsprofils (30) innerhalb von Grenzen (76, 78) auf der Grundlage der einen oder der mehreren Eingaben (40), wobei das Bewegungsprofil (30) den Energieverbrauch reduziert, wenn es auf eine Motoransteuerung (32) zur Steuerung eines Motors (34) angewendet wird, der mit der industriellen Maschine (36) verbunden ist, wobei mindestens eine der Grenzen eine Grenze miteinschließt, die um eine Sollbahn (74) herum festgelegt ist,

wobei die Grenzen (76, 78) durch Gewichtungsmatrizen in einer Kostenfunktion repräsentiert werden, und wobei iteratives Erzeugen, durch den Prozessor (44), des Bewegungsprofils (30) innerhalb der Grenzen (76, 78) auf der Grundlage der einen oder der mehreren Eingaben (40) umfasst: erneutes Berechnen der Gewichtungsmatrizen bei jeder Iteration, wenn das Bewegungsprofil (30) nicht innerhalb der durch die Gewichtungsmatrizen repräsentierten Grenzen (76, 78) liegt; und

wobei, sobald das Bewegungsprofil (30) innerhalb der Grenzen (76, 78) liegt, die Gewichtungsmatrizen weiterhin iterativ erneut berechnet werden, bis die Gewichtungsmatrizen zu einer Lösung konvergieren, die ein Bewegungsprofil (30) innerhalb der Grenzen (76, 78) ergibz, das minimale Energiekosten hat; und

Anwenden (64), durch den Prozessor (44), des Bewegungsprofils (30) auf die Motoransteuerung (32) zur Steuerung des mit der industriellen Maschine (36) verbundenen Motors (34).

8. Verfahren nach Anspruch 7, das umfasst: Anzeigen des Bewegungsprofils als eine Visualisierung auf einer Anzeige; oder

das umfasst: iteratives Suchen, mittels des Prozessors, nach dem Bewegungsprofil, das eine Energiekostenfunkton minimiert, so dass das Bewegungsprofil innerhalb der Grenzen liegt.

9. Verfahren nach Anspruch 7, wobei die Grenzen eine erste Grenze, die um die Sollbahn herum festgelegt ist, und eine zweite Grenze umfassen, die als ein maximaler Positionsfehler an einer Sollposition festgelegt ist.

10. System, mit:

einer industriellen Maschine (36), die einen Motor (34) und eine Motoransteuerung (32) aufweist; und einer Steuerungs/Überwachungseinrichtung (14), die einen Prozessor (44) aufweist, der ausgebildet ist zum:

Empfangen einer oder mehrerer Eingaben (40), die einen mechanischen Aufbau und eine Sollbewegung einer industriellen Maschine betreffen;

iteratives Erzeugen (84) eines Bewegungsprofils (30) innerhalb von Grenzen (76, 78) auf der Grundlage der einen oder der mehreren Eingaben (40), wobei das Bewegungsprofil (30) den Energieverbrauch reduziert, wenn es auf eine Motoransteuerung (32) zur Steuerung eines Motors (34) angewendet wird, der mit der industriellen Maschine (36) verbunden ist, wobei mindestens eine der Grenzen eine Grenze miteinschließt, die um eine Sollbahn (74) herum festgelegt ist,

wobei die Grenzen (76, 78) durch Gewichtungsmatrizen in einer Kostenfunktion repräsentiert werden, und wobei iteratives Erzeugen, durch den Prozessor (44), des Bewegungsprofils (30) innerhalb der Grenzen (76, 78) auf der Grundlage der einen oder der mehreren Eingaben (40) umfasst: erneutes Berechnen der Gewichtungsmatrizen bei jeder Iteration, wenn das Bewegungsprofil (30) nicht innerhalb der durch die Gewichtungsmatrizen repräsentierten Grenzen (76, 78) liegt; und

wobei, sobald das Bewegungsprofil (30) innerhalb der Grenzen (76, 78) liegt, die Gewichtungsmatrizen weiterhin iterativ erneut berechnet werden, bis die Gewichtungsmatrizen zu einer Lösung konvergieren, die ein Bewegungsprofil (30) innerhalb der Grenzen (76, 78), das minimale Energiekosten hat, ergibt; und Anwenden (64) des Bewegungsprofils (30) auf die Motoransteuerung (32) zur Steuerung des mit der industriellen Maschine (36) verbundenen Motors (34).

11. System nach Anspruch 10, wobei die Kostenfunktion in Bezug auf Energie definiert ist.

12. System nach Anspruch 10, wobei die Grenzen eine erste Grenze, die um die Sollbahn herum festgelegt ist, und eine zweite Grenze umfassen, die einen maximalen Positionsfehler an einer Sollposition beinhaltet, wobei die erste und die zweite Grenze entsprechend durch eine erste Gewichtungsmatrix und eine zweite Gewichtungsmatrix in der Kostenfunktion berücksichtigt sind, und die erste Gewichtungsmatrix und die zweite Gewichtungsmatrix bei jeder Iteration erneut berechnet werden, wenn das Bewegungsprofil nicht innerhalb der Grenzen liegt.

## Revendications

1. Support lisible par un ordinateur, non transitoire, tangible (48) stockant des instructions qui, lorsqu'exécutées par un processeur (44), commandent au processeur (44) de :

recevoir une ou plusieurs entrées (40) relatives à une conception mécanique et un mouvement souhaité d'une machine industrielle (36) ;

générer itérativement un profil de mouvement (30) au sein de limites (76, 78) selon l'une ou plusieurs entrées (40), dans lequel le profil de mouvement (30) diminue une consommation d'énergie lorsqu'appliqué à un entraînement de moteur (32) pour contrôler un moteur (34) connecté à la machine industrielle (36), dans lequel au moins un des limites comprend une limite définie autour d'une trajectoire désirée (74),

dans lequel les limites (76, 78) sont représentées par des matrices de pondération dans une fonction de coût, et dans lequel une génération itérative, via le processeur (44), le profil de mouvement (30) au sein des limites (76, 78) selon l'une ou plusieurs entrées (40) comprend un recalcul des matrices de pondération à chaque itération lorsque le profil de mouvement (30) ne s'inscrit pas dans les limites (76, 78) représentées par les matrices de pondération ; et

dans lequel, une fois que le profil de mouvement (30) s'inscrit dans les limites (76, 78), les matrices de pondération continuent d'être itérativement recalculées jusqu'à ce que les matrices de pondération convergent vers une solution qui induit un profil de mouvement (30) au sein des limites (76, 78) qui présente un coût énergétique minimal ; et

appliquer la trajectoire de profil de mouvement à l'entrainement de moteur (32) pour contrôler le moteur (34) connecté à la machine industrielle (36).

2. Le support lisible par un ordinateur de la revendication 1, dans lequel au moins une des limites comprend une limite définie en tant qu'erreur de position maximale à une position cible pour un effecteur de la machine industrielle.

3. Le support lisible par un ordinateur de l'une des revendications 1 à 2, dans lequel l'une ou plusieurs entrées comprennent une trajectoire désirée, une limite de trajectoire désirée, une erreur de position maximale à une limite de position cible, des données de moteur et mécaniques, ou une combinaison de celles-ci.

4. Le support lisible par un ordinateur de l'une des revendications 1 à 3, dans lequel les instructions, lorsqu'exécutées par le processeur, font générer itérativement par le processeur le profil de mouvement en utilisant une équation hamiltonienne qui inclut un modèle mécanique sous la forme d'une équation état-espace et une fonction de coût.

5. Le support lisible par un ordinateur de l'une des revendications 1 à 4, dans lequel le profil de mouvement comprend un signal de référence de position angulaire, un signal de référence de position linéaire, un signal de référence de vélocité angulaire, un signal de référence de vélocité linéaire, ou une combinaison de ceux-ci.

6. Le support lisible par un ordinateur de l'une des revendications 1 à 5, dans lequel les instructions, lorsqu'exécutées par le processeur, font appliquer par le processeur le profil de mouvement à l'entraînement de moteur de sorte que l'entraînement de moteur met en oeuvre le profil de mouvement en actualisant un code de machine de l'entraînement de moteur sans apporter de changements mécaniques ou électriques à la machine industrielle.

7. Procédé (60), comprenant :

réception (72), par un processeur (44), d'une ou plusieurs entrées (40) relatives à une conception mécanique et un mouvement souhaité d'une machine industrielle (36) ;
génération itérative (84), via le processeur (44), d'un profil de mouvement (30) au sein de limites (76, 78) selon l'une ou plusieurs entrées (40), dans lequel le profil de mouvement (30) diminue une consommation d'énergie lorsqu'appliqué à un entraînement de moteur (32) pour contrôler un moteur (34) connecté à la machine industrielle (36), dans lequel au moins un des limites comprend une limite définie autour d'une trajectoire désirée (74), dans lequel les limites (76, 78) sont représentées par des matrices de pondération dans une fonction de coût, et dans lequel une génération itérative, via le processeur (44), le profil de mouvement (30) au sein des limites (76, 78) selon l'une ou plusieurs entrées (40) comprend un recalcul des matrices de pondération à chaque itération lorsque le profil de mouvement (30) ne s'inscrit pas dans les limites (76, 78) représentées par les matrices de pondération ; et
dans lequel, une fois que le profil de mouvement (30) s'inscrit dans les limites (76, 78), les matrices de pondération continuent d'être itérativement recalculées jusqu'à ce que les matrices de pondération convergent vers une solution qui induit un profil de mouvement (30) au sein des limites (76, 78) qui présente un coût énergétique minimal ; et
application (64), via le processeur (44), du profil de mouvement (30) à l'entrainement de moteur (32) pour contrôler le moteur (34) connecté à la machine industrielle (36).

8. Le procédé de la revendication 7, comprenant un affichage du profil de mouvement sous forme d'une visualisation sur un écran ; ou
comprenant une recherche itérative, via le processeur, du profil de mouvement qui minimise une fonction de coût énergétique une fois que le profil de mouvement s'inscrit dans les limites.

9. Le procédé de la revendication 7, dans lequel les limites comprennent une première limite définie autour de la trajectoire désirée et une deuxième limite définie en tant qu'erreur de position maximale à une position cible.

10. Système, comprenant :

une machine industrielle (36) comprenant un moteur (34) et un entraînement de moteur (32) ; et
un dispositif de contrôle/surveillance (14) comprenant un processeur (44) configuré pour :

recevoir une ou plusieurs entrées (40) relatives à un fonctionnement désiré de la machine industrielle (36) ;
générer itérativement (84) un profil de mouvement (30) au sein de limites (76, 78) selon l'une ou plusieurs entrées (40), dans lequel le profil de mouvement (30) diminue une consommation d'énergie lorsqu'appliqué à l'entraînement de moteur (32) pour contrôler le moteur (32) de la machine industrielle (36), dans lequel au moins un des limites comprend une limite définie autour d'une trajectoire désirée (74), dans lequel les limites (76, 78) sont représentées par des matrices de pondération dans une fonction de coût, et dans lequel une génération itérative, via le processeur (44), le profil de mouvement (30) au sein des limites (76, 78) selon l'une ou plusieurs entrées (40) comprend un recalcul des matrices de pondération à chaque itération lorsque le profil de mouvement (30) ne s'inscrit pas dans les limites (76, 78) représentées par les matrices de pondération ; et

dans lequel, une fois que le profil de mouvement (30) s'inscrit dans les limites (76, 78), les matrices de pondération continuent d'être itérativement recalculées jusqu'à ce que les matrices de pondération convergent vers une solution qui induit un profil de mouvement (30) au sein des limites (76, 78) qui présente un coût énergétique minimal ; et

appliquer (64) le profil de mouvement (30) à l'entrainement de moteur (32) pour contrôler le moteur (34) connecté à la machine industrielle (36).

**11.** Le système de la revendication 10, dans lequel la fonction de coût est définie en termes d'énergie.

**12.** Le système de la revendication 10, dans lequel les limites comprennent une première limite définie atour de la trajectoire désirée et une deuxième limite qui comprend une erreur de position maximale à une position cible, les première et deuxième limites sont prises en compte par une première matrice de pondération et une deuxième matrice de pondération, respectivement, dans la fonction de coût, et la première matrice de pondération et la deuxième matrice de pondération sont recalculées à chaque itération lorsque le profil de mouvement ne s'inscrit pas dans les limites.

FIG. 1

FIG. 2

14

CONTROL / MONITORING DEVICE

42
COMMUNICATION

44
PROCESSOR

46
MEMORY

52
DISPLAY

48
STORAGE

50
I/O PORTS

FIG. 3

60

ITERATIVELY GENERATE ENHANCED MOTION PROFILE USING AN OPTIMIZATION FUNCTION INCLUDING A MECHANICAL MODEL AND A COST FUNCTION — 62

APPLY ENHANCED MOTION PROFILE TO A DRIVE TO CONTROL A MOTOR OF A MACHINE — 64

FIG. 4

**62**

ITERATIVELY GENERATE ENHANCED MOTION PROFILE USING AN OPTIMIZATION METHOD INCLUDING A MODEL OF A MACHINE AND A COST FUNCTION

**70**

RECEIVE INPUTS

**74** ┆DESIRED MOTION PROFILE┆

**76** ┆TRAJECTORY BOUNDS┆

**78** ┆MAX. POSITION ERROR AT TARGET POSITION┆

**80** ┆MOTOR AND MECHANICAL DATA┆

**72**

**84**

DETERMINE ENHANCED MOTION PROFILE

GENERATE CANDIDATE MOTION PROFILE — **86**

CALCULATE WEIGHTING MATRICES P AND Q — **90**

DOES CANDIDATE MOTION PROFILE MINIMIZE AN ENERGY COST FUNCTION WITHIN CERTAIN BOUNDARIES ? — **88**

NO

YES

FIG. 5

**64** — APPLY ENHANCED MOTION PROFILE TO A DRIVE TO CONTROL A MOTOR OF THE MACHINE

FIG. 6

EP 3 239 790 B1

FIG. 7

FIG. 8

FIG. 9

EP 3 239 790 B1

FIG. 10

**REFERENCES CITED IN THE DESCRIPTION**

*This list of references cited by the applicant is for the reader's convenience only. It does not form part of the European patent document. Even though great care has been taken in compiling the references, errors or omissions cannot be excluded and the EPO disclaims all liability in this regard.*

**Non-patent literature cited in the description**

- **ALEXANDER HEIM et al.** Trajectory optimization of industrial robots with application to computer-aided robotics and robot controllers. *OPTIMIZATION,* 01 January 2000, vol. 47 (3-4), ISSN 0233-1934, 407-420